# EUROPEAN PATENT APPLICATION

(11) **EP 4 461 885 A1**
(43) Date of publication of application: **13.11.2024**
(21) Application number: 23172045.9
(22) Date of filing: 08.05.2023
(51) Int. Cl.: E03B 3/28, B01D 5/00, B01D 53/00, F24S 10/00

(54) **WATER CATCHMENT UNIT, WATER CATCHMENT SYSTEM**

(71) Applicant: Adsorbus GmbH, 13509 Berlin (DE)
(72) Inventor: MELLEROWICZ, Karl, 10551 Berlin (DE); BRAUNSCHWEIG, Niels, 10435 Berlin (DE)
(74) Representative: Eisenführ Speiser

(57) **Abstract**

Water catchment unit comprising a solar vacuum tube having a closed and an open end, wherein at the open end of the solar vacuum tube an air inlet and an air outlet are arranged, wherein an air inlet pipe connected to the air inlet extends in an interior of said solar vacuum tube from the open end to the closed end, wherein an inner air outlet of the air inlet pipe is arranged in the vicinity of the closed end and wherein an adsorbent is arranged in the interior of said solar vacuum tube.

## Description

The invention relates to a water catchment unit and a water catchment system.

In many parts of the world water shortage is a serious problem. One possibility to make drinking water available is obtaining water from the air. There are currently three relevant processes used for obtaining (drinking) water from unsaturated humid air: condensation by means of a refrigeration machine; absorption on a salty liquid (e.g.: lithium chloride) and adsorption on porous solids (e.g.: silica gel, zeolite, MOFs).

While condensation by means of a refrigerating machine requires typically electrical energy as the main driving energy and is very energy intensive, especially at low absolute humidity, when using absorption on a salty liquid the liquid sorbent has to be constantly pumped around and sprayed to ensure contact with the ambient air and salt concentration must be controlled and monitored. Thus adsorption is a promising technique.

In an adsorption water harvest system suitable adsorption materials absorb water from the ambient air, even at very low absolute humidity (adsorption phase). This is followed by thermal regeneration of the adsorption material using solar energy (desorption phase). In this process, the water is expelled from the adsorption material at elevated temperature and the dew point is increased, allowing direct condensation of the water against ambient temperature. The two phases are often passed through in a diurnal rhythm: At night, the adsorbent material absorbs water from the ambient air (adsorption). During the day, the sun heats the adsorption material in the collector and drives the water out of the material (desorption). The extracted water is collected. Before it can be used as drinking water, it is often mixed with minerals.

There a several approaches in using solar vacuum tubes containing adsorbent for obtaining water. For example in CN 209653029U, CN 109653298A, CN 201817855U and CN 101906799A a solar vacuum tube is described for water recovery via adsorption/desorption, which is closed on one side. There are outlets for steam in a desorption mode, for the absorption mode the plug has to be removed.

One challenge in providing drinking water in regions with water shortages is that to allow access to drinking water in relevant extent installations for obtaining water have to be not only relatively inexpensive and easy to assemble but also easy to operate and maintain, while being efficient.

An object of the invention is to provide an improved water catchment unit, which allows for efficient and automatic operation.

According to a first aspect of the invention the object is achieved by a water catchment unit comprising a solar vacuum tube having a closed end and an open end, wherein at the open end of the solar vacuum tube an air inlet and an air outlet are arranged. An air inlet pipe is connected to the air inlet and extends in an interior of said solar vacuum tube from the open end to the closed end of the solar vacuum tube. An inner air outlet of the air inlet pipe is thereby arranged in the vicinity of the closed end and an adsorbent is arranged in the interior of said solar vacuum tube.

The invention is based on the recognition that the known use of solar vacuum tubes for water catchment units can be improved by exploiting the adsorbent in a more efficient manner in that air is forced to homogeneously flow through the adsorbent. This is achieved by forcing loading of nearly the whole volume of the adsorbent, which is at first achieved when an air inlet pipe extending into the vicinity of the closed end of the solar vacuum tube is used, as air is forced to travel through the adsorbent from the closed end to the open end at least, shortcuts are prevented.

On the other hand the invention is based on the recognition that a homogeneous loading of the adsorbent may be achieved by equalizing the pressure losses in every possible air path and that this can be achieved by securing that the path length for all air paths through the adsorbent, but also through the water catchment unit as a whole should be in a narrow range.

Additionally the invention includes the recognition that the use of an air inlet and an air outlet allow for a stand-alone solution as no one is needed to remove a plug as in the prior art, when changing from desorption to adsorption. The prolonged air paths through the adsorbent allow for high efficiency of the water catchment tube.

It is to be understood, that while the invention is merely described with an air flow from the air inlet to the air outlet the solar vacuum tube can also be passed from the air outlet to the air inlet. Thus the wording inlet and outlet does not restrict the direction of air flow.

Preferably the inner air outlet is arranged at not more than 50 % of an inner length of the solar vacuum tube from the closed end of the solar vacuum tube, preferably between 10% and 50% of an inner length of the solar vacuum tube from the closed end of the solar vacuum tube. The inner air outlet can be arranged at an end of the air inlet pipe or on a side of the air inlet pipe.

It is further preferred that at least 70% of a volume of the adsorbent can be reached via a flow path, whose length is not more than 110% of the shortest possible flow path through the adsorbent. It is further preferred that at least 90%, respectively 95 % of the volume of the adsorbent can be reached via a flow path, whose length is not more than 110% of the shortest possible flow path through the adsorbent. This requirement may lead to a further improvement of the efficiency of the water catchment unit as especially similar path lengths for the whole passing air are favourable to exploit the adsorbent and secure equal pressure losses.

Preferably the inner air outlet is in connection to an open end of an air distribution conduct, wherein the air distribution conduct further has a closed end and at least one lateral side opening along its length, preferably along its entire length, the lateral side opening being arranged such that air can reach an adsorbent section with the adsorbent through the lateral side opening, and wherein an air collection conduct having a closed end and an open end is in connection with the air outlet with its open end and having at least one lateral side opening along its length, preferably along its entire length, the lateral side opening being arranged such that air can leave the adsorbent section through the lateral side opening. This arrangement forces the air flow to enter the adsorbent section via the air distribution conduct and to leave it via the air collection conduct. This further equals the path lengths for the air through the adsorbent resulting in relatively short individual paths through the adsorbent within a short range for all paths. The relatively short paths for the whole amount of air secure that the adsorbent is loaded homogeneously as loading takes place from the first contact of air with the adsorbent, thus especially with lower humidity resulting in loading of only a small volume of the adsorbent as after that the air passing the further path is already dry. Additionally when the volume at the entry is already loaded, there is no further adsorption in this volume and cause unnecessary pressure loss. Thus the use of short pathes is preferred to longer pathes in order to avoid dead volumes, in which no adsorption takes place.

It is thereby preferred that a total length of both the air distribution conduct and the air collection conduct deviates less than 50 %, preferably less than 10% of a total length of the air inlet pipe. In other words preferably a total length of both the air distribution pipe and as well the air collection conduct is not shorter than 50 % of an inner length of the solar vacuum tube and wherein the open end of the air distribution pipe and as well as the closed end of the air collection conduct is arranged at not more than 50 % of the inner length of the solar vacuum tube from the closed end of the solar vacuum tube.

The at least one lateral side opening of the air distribution conduct and/or the at least one lateral side opening of the air collection conduct is preferably one large opening or a multitude of small openings.

The air inlet pipe, the air distribution conduct and/or the air collection conduct may be at least partly built of adsorbing material and/or contain adsorbing material.

In an embodiment the adsorbent is held with at least one air-permeable retention unit. A retention unit allows to held the adsorbent in place and to realize further arrangements of the adsorbent.

In an embodiment the at least one retention unit is built as a retention tube centrally arranged in the interior of the solar vacuum tube, in which the air inlet pipe is arranged and wherein the adsorbent is arranged between the retention unit and an inner wall of the solar vacuum tube and wherein the retention tube has only two air-permeable areas extending on the length of the retention tube, which are arranged facing each other and separated via the air inlet pipe. In an alternative embodiment the at least one retention unit is built in form of an oblique cylinder having a closed bottom and a closed top and two, preferably straight, air-permeable lateral surfaces, the adsorbent being arranged within the oblique cylinder and wherein preferably the air inlet pipe is built of straight tubes and is arranged in part along the bottom of the retention unit. In both alternatives, the arrangement of the adsorbent in the respective retention unit allows to force the air using relatively short paths through the adsorbent, wherein the length of the paths also differs only slightly.

In a further embodiment at least one wall of the retention unit comprise a perforated sheet or a grid, preferably with a variation of perforation or a variation of mesh opening along the length. The variation of perforation or mesh opening allows for further influencing the air paths through the adsorbent. The sheet or grid is preferably made of a metal.

In an embodiment the air inlet pipe is built of a metal sheet.

The air inlet pipe may have a decreasing profile. With the decreasing profile pressure relationships within the solar vacuum tube may be influenced and through this also the air paths.

In an embodiment the water catchment unit further comprises a heating device in the interior of said solar vacuum tube.

The open end of the solar vacuum tube may be closed by a plug or lid, through which the air inlet and the air outlet extend.

Several separation elements may be arranged within the adsorbent, wherein the separation elements can be air-permeable and temperature stable and preferably flexible. These separation elements may help to held the adsorbent in place and additionally influence the air paths in a favourable manner. Furthermore the separation elements may compensate thermal expansion. The separation elements may comprise open-pored foam and/or wire mesh and/or perforated plates.

The adsorbent may be a porous solid, preferably silica gel, zeolite or a metal-organic framework. The adsorbent may be in form of one or several moulded bodies or in the form of a loose filling of adsorbent particles.

The air inlet pipe may be a separate element, e.g. a metallic or plastic pipe. In further embodiments the air inlet pipe may be built by an air-impermeable wall of other elements e.g. of the moulded body of the adsorbent or of parts of the retention unit.

According to a second aspect the invention relates to a water catchment system comprising at least one water catchment unit according to the first aspect of the invention and a condenser unit connected to the air outlet and/or at least one fan connected to the air inlet, wherein the at least one fan is preferably a bidirectional fan. A bidirectional fan allows on one hand to recapture water from the condenser unit and on the other hand to accelerate the adsorption. In the condenser unit, the water may condense. The fan may further improve the output of the water catchment unit by raising the air flow rate.

The system may comprise two fans, one fan with higher flow rate for an adsorption mode and one fan with lower flow rate for desorption mode. Alternatively, if the system comprises only one fan, this fan may be able to be operated with different flow rates. In case of air flow through the solar vacuum tube from the air outlet to the air inlet the condenser can be connected to the air inlet, while the fan is connected to the air outlet.

The water catchment system may further comprise an air recirculation from the condenser to the air inlet. This may further enhance the efficiency of the water catchment system. Preferably the air recirculation comprises a controllable valve.

The water catchment system may further comprise a controller for controlling operation of the fan, preferably in accordance with time of the day, ambient temperature, humidity and/or sun exposure.

Preferably the controller may comprise a temperature switch, preferably a bimetallic temperature switch. This allows for a relatively easy and robust temperature dependent operation.

The fan can be powered with wind or solar power or directly driven with wind energy. The water catchment system can further comprise a photovoltaic unit to generate solar power for the fan and/or the controller.

As to the advantages, preferred embodiments and details of water catchment system reference is made to the corresponding aspects and embodiments described herein above with respect to the water catchment unit.

Further advantages and advantageous features of the invention are disclosed in the following description and in the dependent claims.

In the drawings:
Fig. 1 is a schematic drawing of an embodiment of a water catchment unit according to the first aspect of the invention;
Fig. 2a is a schematic drawing of an embodiment of a water catchment system according to the second aspect of the invention;
Fig. 2b is a sectional drawing of the embodiment of a water catchment unit in Fig. 2a
Fig. 3a is a schematic drawing of a further embodiment of a water catchment system according to the second aspect of the invention;
Fig. 3b is a sectional drawing of the embodiment of a water catchment unit in Fig. 3a.

In the following description of embodiments, similar reference signs generally refer to similar elements.

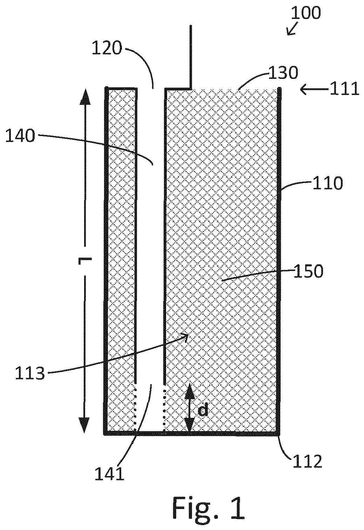

Fig. 1 is a schematic drawing of an embodiment of a water catchment unit according to the first aspect of the invention. The water catchment unit 100 comprises a solar vacuum tube 110 with a closed end 112 and an open end 111. At the open end 111 of the solar vacuum tube 110 an air inlet 120 and an air outlet 130 are arranged. An air inlet pipe 140 extends in an interior 113 of said solar vacuum tube 110 from the open end 111 to the closed end 112 of the solar vacuum tube 110 connected to the air inlet, wherein an inner air outlet 141 of the air inlet pipe 140 is arranged in the vicinity of the closed end 112 of said solar vacuum tube and wherein an adsorbent 150 is arranged in the interior of said solar vacuum tube. The adsorbent 150 is in this embodiment provided as a moulded body. The air inlet pipe 140 in this embodiment is metallic pipe and a separate element. In further embodiments the air inlet pipe 140 may be built by an air-impermeable wall of the moulded body of the adsorbent 150. The inner air outlet 141 in this embodiment is arranged in a distance d of 1 cm from the closed end 112 of the solar vacuum tube 110, wherein the solar vacuum tube has an overall inner length of 180 cm. In the shown embodiment all air has to travel at least from the closed end 112 of the solar vacuum tube 110 to the air outlet 130 through the adsorbent. Thus the contact between air and adsorbent is enhanced through the relatively equal path lengths.

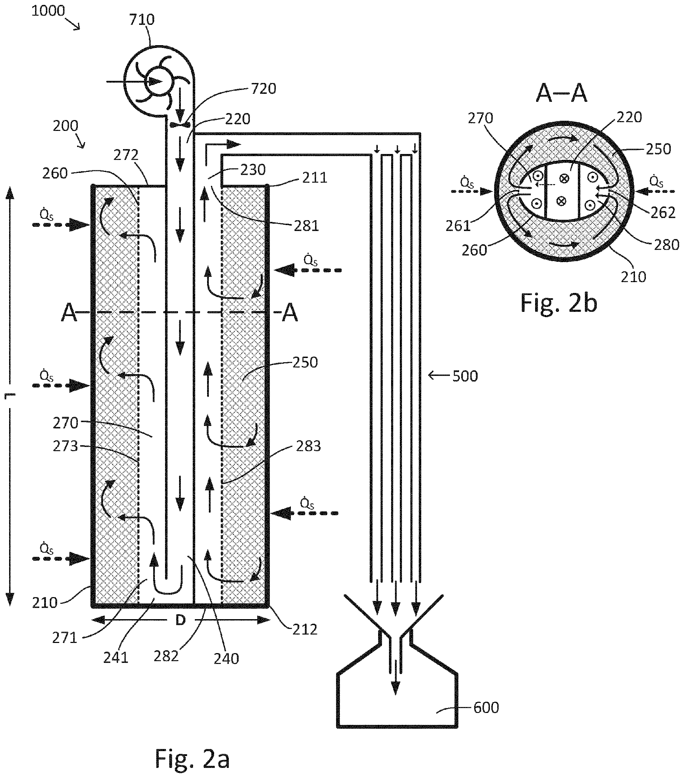

Fig. 2a is a schematic drawing of an embodiment of a water catchment system 1000 according to the second aspect of the invention. Fig. 2b is a sectional drawing of the embodiment of a water catchment unit 200 in Fig. 2a. The water catchment system 1000 comprises one water catchment unit 200 and a condenser unit 500 connected to the air outlet 230 the water catchment unit 200 and a water collection unit 600. Furthermore the water catchment system 1000 comprises two fans, one fan 710 with higher flow rate for an adsorption mode, herein a radial fan and one fan 720 with lower flow rate for desorption mode, e.g. an axial fan. In alternative embodiments the system may comprise only one fan and this fan may be able to be operated with different flow rates.

In the shown embodiment the water catchment unit 200 comprises a solar vacuum tube 210 with a closed end 212 and an open end 211. At the open end 211 of the solar vacuum tube 210 an air inlet 120 and the air outlet 230 are arranged. An air inlet pipe 240 extends in an interior of said solar vacuum tube 210 from the open end 211 to the closed end 212 of the solar vacuum tube 210 connected to the air inlet, wherein an inner air outlet 241 of the air inlet pipe 240 is arranged in the vicinity of the closed end 212 of said solar vacuum tube and wherein an adsorbent 250 is arranged in the interior of the solar vacuum tube. Furthermore an retention unit in form of a retention tube 260 centrally arranged in the interior of the solar vacuum tube 210 is present. In the retention tube 260 the air inlet pipe 240 is arranged. The adsorbent 250 is arranged between the retention unit 260 and an inner wall of the solar vacuum tube. Herein the adsorbent 250 is preferably in form of a loose filling of adsorbent particles. The retention tube 260 has only two air-permeable areas 261, 262 extending on the length of the retention tube 260, which are arranged facing each other and separated via the air inlet pipe 240. The solar tube 210 has in this embodiment a length I of 180 cm and a diameter D of 4,3 cm.

Air entering the air inlet 220 is thus forced to flow to the closed end 212 of the solar vacuum tube through the air inlet pipe 240. The air leaves the air inlet pipe 240 at the inner air outlet 241 and enters an air distribution conduct 270, which is built by the air inlet pipe 240 and the retention tube 260, via an open end 271, which is in connection to the inner air outlet 241. The air distribution conduct 270 further has a closed end 272 and one lateral side opening 273 along its entire length, which is built of one air-permeable area 261 of the retention tube 260. The lateral side opening 273 is arranged such that the air reaches an adsorbent section with the adsorbent 250 through the lateral side opening. The air then leaves the adsorbent section with the adsorbent through a lateral side opening 283 along the length of an air collection conduct 280 having a closed end 282 and an open end 281. The lateral side opening 283 is arranged such that air can leave the adsorbent section through the lateral side opening 283. The air collection conduct 280 is built by the air inlet pipe 240 and the retention tube 260. The lateral side opening 283 is built of the other air-permeable area 262 of the retention tube 260. The open end 281 of the air collection conduct is in connection with the air outlet 230. Thus air leaves the solar vacuum tube via air outlet 230 and then travels to the condenser 500. In adsorption mode air with higher humidity thus passes the adsorbent, water is adsorbed at the adsorbent and dry air leaves the water catchment unit. In desorption mode the adsorbent 250 within the solar vacuum tube 210 is heated (*Q̇ₛ* ) and water vapour is desorbed from the adsorbent 250. Water vapour - preferably together with an air flow caused by fan 720 - then leaves the water catchment unit 200 and is condensed in the condenser 500. The obtained water is then collected in the water collection unit 600. Thus the shown embodiment forces the air flow to enter the adsorbent section via the air distribution conduct and to leave it via the air collection conduct. This further enhances the equality of the path lengths through the adsorbent as well as through the water catchment unit as whole resulting in relatively short individual paths within a short range for all paths. In the shown embodiment a total length of both the air distribution conduct 270 and the air collection conduct 280 deviates less than 10% of a total length of the air inlet pipe 240.

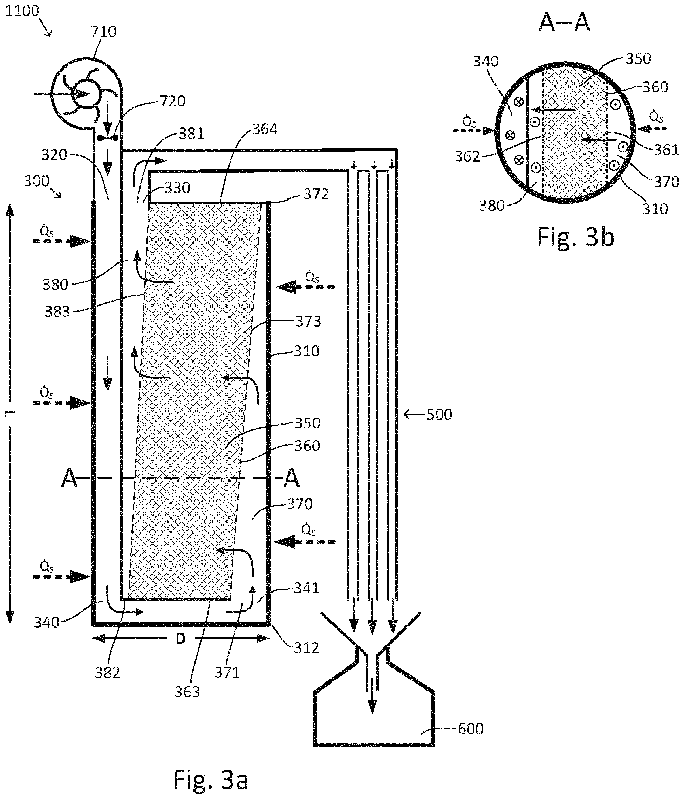

Fig. 3a is a schematic drawing of a further embodiment of a water catchment system 1100 according to the second aspect of the invention. Fig. 3b is a sectional drawing of the embodiment of a water catchment unit 300 in Fig. 3a. The water catchment system 1100 differs from the water catchment system 1000 in Fig. 2a and 2b only in the inner construction of the water catchment unit 300. Thus in the following only the water catchment unit 300 is described in detail. Regarding the further elements of the water catchment system 1100 reference is made to the description of Fig. 2a and 2b.

In the shown embodiment the retention unit is built in form of an oblique cylinder 360 having a closed bottom 363 and a closed top 364 and two, herein straight, air-permeable lateral surfaces 361, 362. The adsorbent 350 is arranged within the oblique cylinder 360. The air inlet pipe 340 is built of straight tubes and is arranged in part along the closed bottom 363 of the retention unit.

Air entering the air inlet 320 is forced to flow to the closed end 312 of the solar vacuum tube through the air inlet pipe 340. The air leaves the air inlet pipe 340 at the inner air outlet 341 and enters the air distribution conduct 370, which is herein built by the oblique cylinder 360 and an inner wall of the solar vacuum tube 310, via an open end 371, which is in connection to the inner air outlet 341. The air distribution conduct 370 further has a closed end 372 and one lateral side opening 373 along its entire length, which is built of one straight air-permeable lateral surface 361 of the oblique cylinder 360. The lateral side opening 373 is arranged such that the air reaches an adsorbent section with the adsorbent 350 through the lateral side opening, herein through the air-permeable lateral surface 361 of the oblique cylinder 360. The air then leaves the adsorbent section with the adsorbent 350 through a lateral side opening 383 along the length of air collection conduct 380 having a closed end 382 and an open end 381. The lateral side opening 383 is arranged such that air can leave the adsorbent section through the lateral side opening 383. The air collection conduct 380 is built by the air inlet pipe 340 and oblique cylinder 360. The lateral side opening 383 is built of the other straight air-permeable lateral surface 362 of the oblique cylinder 360. The open end 381 of the air collection conduct is in connection with the air outlet 330. Thus air or water vapour leaves the solar vacuum tube via air outlet 330 and then travels to the condenser 500. Thus also in this embodiment the arrangement of the adsorbent in the respective retention unit allows to force the air using relatively equal, short paths through the adsorbent to enhance exploitation of the adsorbent.

### Reference signs

- d: distance
- 100: water catchment unit
- 110: solar vacuum tube
- 111: open end
- 112: closed end
- 113: interior
- 120: air inlet
- 130: air outlet
- 140: air inlet pipe
- 141: inner air outlet
- 150: adsorbent
- 200: water catchment unit
- 210: solar vacuum tube
- 211: open end
- 212: closed end
- 220: air inlet
- 230: air outlet
- 240: air inlet pipe
- 241: inner air outlet
- 250: adsorbent
- 260: retention tube
- 261: air-permeable area
- 262: air-permeable area
- 270: air distribution conduct
- 271: open end
- 272: closed end
- 273: lateral side opening
- 280: air collection conduct
- 281: open end
- 282: closed end
- 283: lateral side opening
- 300: water catchment unit
- 500: condenser unit
- 600: water collection unit
- 710: fan
- 720: fan
- 1000: water catchment system
- 1100: water catchment system
- 310: solar vacuum tube
- 312: closed end
- 320: air inlet
- 330: air outlet
- 340: air inlet pipe
- 341: inner air outlet
- 350: adsorbent
- 360: oblique cylinder
- 361: air-permeable lateral surface
- 362: air-permeable lateral surface
- 363: closed bottom
- 364: closed top
- 370: air distribution conduct
- 371: open end
- 372: closed end
- 373: lateral side opening
- 380: air collection conduct
- 381: open end
- 382: closed end
- 383: lateral side opening
- D: diameter
- I: length

## Claims

1. Water catchment unit comprising a solar vacuum tube having a closed and an open end, wherein at the open end of the solar vacuum tube an air inlet and an air outlet are arranged, wherein an air inlet pipe connected to the air inlet extends in an interior of said solar vacuum tube from the open end to the closed end, wherein an inner air outlet of the air inlet pipe is arranged in the vicinity of the closed end and wherein an adsorbent is arranged in the interior of said solar vacuum tube.

2. Water catchment unit according claim 1, wherein the inner air outlet is arranged at not more than 50 % of an inner length of the solar vacuum tube from the closed end of the solar vacuum tube.

3. Water catchment unit according to any of claims 1 or 2, wherein the inner air outlet is in connection to an open end of an air distribution conduct, wherein the air distribution conduct further has a closed end and at least one lateral side opening along its length, preferably along its entire length, the lateral side opening being arranged such that air can reach an adsorbent section with the adsorbent through the lateral side opening, and wherein an air collection conduct having a closed end and an open end is in connection with the air outlet with its open end and having at least one lateral side opening along its length, preferably along its entire length, the lateral side opening being arranged such that air can leave the adsorbent section through the lateral side opening.

4. Water catchment unit according to claim 3, wherein a total length of both the air distribution pipe and as well the air collection conduct is not shorter than 50 % of an inner length of the solar vacuum tube and wherein the open end of the air distribution pipe and as well as the closed end of the air collection conduct is arranged at not more than 50 % of the inner length of the solar vacuum tube from the closed end of the solar vacuum tube.

5. Water catchment unit according to any of claims 3 or 4, wherein the at least one lateral side opening of the air distribution conduct and/or the at least one lateral side opening of the air collection conduct is one large opening or a multitude of small openings.

6. Water catchment unit according to any of the preceding claims, wherein the adsorbent is held with at least one air-permeable retention unit.

7. Water catchment unit according to claim 6, wherein the at least one retention unit is built as a retention tube centrally arranged in the interior of the solar vacuum tube, in which the air inlet pipe is arranged and wherein the adsorbent is arranged between the retention unit and an inner wall of the solar vacuum tube and wherein the retention tube has only two air-permeable areas extending on the length of the retention tube, which are arranged facing each other and separated via the air inlet pipe.

8. Water catchment unit according to claim 7, wherein the at least one retention unit is built in form of an oblique cylinder having a closed bottom and a closed top and two, preferably straight, air-permeable lateral surfaces, the adsorbent being arranged within the oblique cylinder and wherein preferably the air inlet pipe is built of straight tubes and is arranged in part along the bottom of the retention unit.

9. Water catchment unit according to any of the preceding claims, wherein at least one wall of the retention unit comprise a perforated metal sheet or a grid, preferably with a variation of perforation or a variation of mesh opening along the length.

10. Water catchment unit according to any of the preceding claims, wherein the air inlet pipe is built of a metal sheet and/or has a decreasing profile.

11. Water catchment unit according to any of the preceding claims further comprising a heating device in the interior of said solar vacuum tube and/or wherein the open end of the solar vacuum tube is closed by a plug or lid, through which the air inlet and the air outlet extend.

12. Water catchment unit according to one of the preceding claims, wherein several separation elements are arranged within the adsorbent, wherein the separation elements are temperature stable and preferably air-permeable and/or flexible.

13. Water catchment system comprising at least one water catchment unit according to one of the preceding claims and a condenser unit connected to the air outlet and/or at least one fan connected to the air inlet, wherein the at least one fan is preferably a bidirectional fan.

14. Water catchment system according to claim 13, further comprising an air recirculation from the condenser to the air inlet.

15. Water catchment system according to any of claims 13 or 14 further comprising a controller for controlling operation of the fan, preferably in accordance with time of the day, ambient temperature, humidity and/or sun exposure.
